# EUROPEAN PATENT SPECIFICATION

(11) **EP 1 801 382 B1**
(45) Date of publication and mention of the grant of the patent: **22.05.2013**
(21) Application number: 06025829.0
(22) Date of filing: 13.12.2006
(51) Int. Cl.: F02M 35/10

(54) **Air intake device for internal combustion engine**
Ansauglufteinrichtung für Brennkraftmaschine
Dispositif d'admission d'air pour moteur à combustion interne

(30) Priority: 22.12.2005 JP 2005369266
(43) Date of publication of application: 27.06.2007
(73) Proprietor: AISIN SEIKI KABUSHIKI KAISHA, Kariya-shi, Aichi-ken 448-8650 (JP)
(72) Inventor: KONO, Shinji, Kariya-shi, Aichi-ken 448-8650 (JP); KONAKAWA, Hidefumi, Kariya-shi, Aichi-ken 448-8650 (JP); BITOH Yutaka, Kariya-shi, Aichi-ken 448-8650 (JP)
(74) Representative: Kramer - Barske - Schmidtchen

(56) References cited:
- EP-A- 1 607 601
- DE-A1- 4 017 066
- DE-A1- 10 323 978
- JP-A- 2003 343 376
- US-A1- 2003 098 004

## Description

### FIELD OF THE INVENTION

The present invention relates to an air intake device for an internal combustion engine having plural cylinders. Specifically, the air intake device for an internal combustion engine includes an air intake passage divided by means of a partition into a first air intake manifold and a second air intake manifold, so that air can be distributed into a first air intake port of each cylinder through the first intake manifold and into a second air intake port of each cylinder through the second air intake manifold.

### BACKGROUND

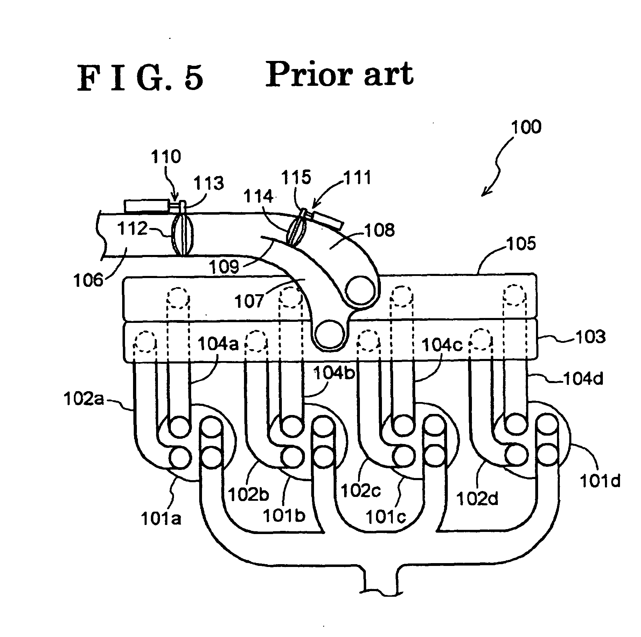

A known air intake device disclosed in JP2003-343376A includes a manifold for distributing air into each of four cylinders of a diesel engine serving as an internal combustion engine. A configuration of the known air intake device 100 is illustrated in Fig.5. As shown in Fig.5, an air intake passage of the air intake device 100 is divided into a first air intake manifold 103 and a second air intake manifold 105. Specifically, the first air intake manifold 103 distributes air into an air intake port 102a of a cylinder 101a, into an air intake port 102b of a cylinder 101b, into an air intake port 102c of a cylinder 101c, and into an air intake port 102d of a cylinder 101d; and the second air intake manifold 105 distributes air into an air intake port 104a of the cylinder 101a, into an air intake port 104b of the cylinder 101b, into an air intake port 104c of the cylinder 101c, and into an air intake port 104d of the cylinder 101d.

Within the air intake passage 106, which is located upstream portion of the first air intake manifold 103 and the second air intake manifold 105, a partition 109 is provided in order to divide the air intake passage 106 into a first air intake passage 107, which is connected to the first air intake manifold 103, and a second air intake passage 108, which is connected to the second air intake manifold 105. A diesel throttle valve 110 is provided upstream of the partition 109 within the air intake passage 106 in order to control an amount of air flowing into each of the manifolds 103 and 105.

Thus, the amount of air flowing into each of the cylinders 101 a, 101b, 101c and 101d through the first air intake manifold 103 and the first air intake ports 102a, 102b, 102c and 102d is determined depending on an opening of the diesel throttle valve 110. In this configuration, a swirl is formed within each of the cylinders 101a, 101b, 101c and 101d.

Further, within the second air intake passage 108 provided downstream of the partition 109, a swirl control valve 111 is provided in order to control an amount of air flowing into each of the cylinders 101a, 101b, 101c and 101d through the second air intake manifold 105 and each of the second air intake ports 104a, 104b, 104c and 104d, so that a condition of swirl generated within each of the cylinders 101a, 101b, 101c and 101d is controlled.

Thus, an opening of the diesel throttle valve 110 is controlled in order to adjust the amount of air flowing through each of the first air intake ports 102a, 102b, 102c and 102d into each of the cylinders 101a, 101b, 101c and 101d. Further, the opening of the diesel throttle valve 110 and an opening of the swirl control valve 111 are controlled in order to control the amount of air flowing through each of the air intake ports 104a, 104b, 104c and 104d into each of the cylinders 101a, 101b, 101c and 101d. Furthermore, the diesel throttle valve 110 includes a valve body 112 and a shaft 113, and the swirl control valve 111 includes a valve body 114 and a shaft 115. The valve body 112 is rotatably supported within the intake passage 106 by the shaft 113, the shaft 113 is attached to an inner wall of the intake passage 106, the valve body 114 is rotatably supported within the second intake passage 108 by the shaft 115, and the shaft 115 is attached to an inner wall of the second intake passage 108. The shafts 113 and 115 are rotated by an actuator (not illustrated).

Further, according to the air intake device disclosed in JP2003-343376A, in order to apply air into each cylinder, both openings of the diesel throttle valve and the swirl control valve need to be controlled. In order to adjust the openings, the above mentioned valve having a valve body, the shaft and the actuator need to be provided at each one of the diesel throttle valve and the swirl control valve. As a result, the configuration of the air intake device becomes complex and a cost of the air intake device is increased.

A need thus exist to provide an air intake device for an internal combustion engine, which achieves both functions of a diesel throttle valve and a swirl control valve, in a simple configuration.

JP 2003 343376 A describes an air intake device according to the preamble of claim 1.

### SUMMARY OF THE INVENTION

According to an aspect of the present invention, an air intake device for an internal combustion engine (1) having plural cylinders (12a, 12b, 12c and 12d) comprises: an air intake passage (4) including a first air intake manifold (2) and a second air intake manifold (3); the first air intake manifold distributing air to a first air intake port (13a, 13b, 13c or 13d) provided at each one of the cylinders; and the second air intake manifold distributing air to a second air intake port (14a, 14b, 14c or 14d) provided at each one of the cylinders, wherein the air intake device for an internal combustion engine further comprises: a partition (7) provided within the air intake passage to divide the air intake passage into the first air intake manifold and the second air intake manifold; and a flow control mechanism (8) having a valve body (9) rotatably supported by an inner wall (28) of the air intake passage and located upstream of the partition within the air intake passage, wherein, the flow control mechanism controls a cross section area of the air intake passage upstream of the partition with the valve body operated so that an amount of air flowing into the first air intake manifold and an amount of air flowing into the second air intake manifold are controlled; and the flow control mechanism is operated in a manner where the valve body thereof is positioned to be one of: in a first position (P1) at which the valve body closes air flow communication between the air intake passage and the cylinders; in a second position (P2) at which air flows into only the first air intake manifold; and in a third position (P3) at which air flows into both the first air intake manifold and the second air intake manifold.

According to the configuration of the embodiment, by changing the position of the valve body of the flow control mechanism provided upstream of the partition within the air intake passage, a total amount of air flowing into the cylinders, provided downstream of the flow control mechanism, are controlled so as to be increased or decreased, at the same time, a ratio between the amount of air flowing into the cylinders through the first air intake manifold and the amount of air flowing into the cylinders through the second air intake manifold is changed. Specifically, the flow control mechanism is rotated in a manner where the valve body thereof is positioned: at a first position at which the cross section area of the air intake passage is fully closed; at a second position at which air flows only into the first air intake manifold; or at a third position at which airflows into both the first air intake manifold and the second air intake manifold. Thus, the amount of air flowing into the first air intake manifold and the amount of air flowing into the second air intake manifold are controlled.

Thus, because the total amount of air flowing into each of the cylinders is controlled so as to be increased or decreased, the internal combustion engine is operated under various conditions, for example, the internal combustion engine may be operated at a low rotation speed, and the internal combustion engine may also be operated at a high rotation speed. Further, because the ratio between the amount of air flowing through the first air intake manifold into each of the cylinders and the amount of air flowing through the second air intake manifold into each of the cylinders is adjustable, a state of swirl generated within each of the cylinders can be controlled. The swirl is generated by an interaction of air flowing through the first air intake manifold into the cylinder and air flowing through the second air intake manifold into the cylinder.

By providing one flow control mechanism upstream of each cylinder within the air intake passage, an air intake device for an internal combustion engine functions as the known diesel throttle valve and also functions as a swirl control valve. Thus, the configuration of the device is simplified, and costs of the device are reduced, at the same time, functions, required as the air intake device for an internal combustion engine, are realized.

### BRIEF DESCRIPTION OF THE DRAWINGS

The foregoing and additional features and characteristics of the present invention will become more apparent from the following detailed description considered with reference to the accompanying drawings, wherein:
Fig. 1 illustrates a schematic block diagram indicating an air intake device according to a embodiment of the present invention;
Fig.2A illustrates a longitudinal sectional view of a diesel throttle valve not according to the invention;
Fig.2B illustrates a transverse sectional view indicating the diesel throttle valve along IIB-IIB line in Fig.2A;
Fig.3 illustrates a longitudinal sectional view indicating a diesel throttle valve according to an embodiment of the present invention;
Fig.4 illustrates a longitudinal sectional view indicating a diesel throttle valve according to another embodiment of the present invention;
Fig.5 illustrates a schematic block diagram indicating a known air intake device; and
Fig.6 illustrates a longitudinal sectional view of a diesel throttle valve.

### DETAILED DESCRIPTION

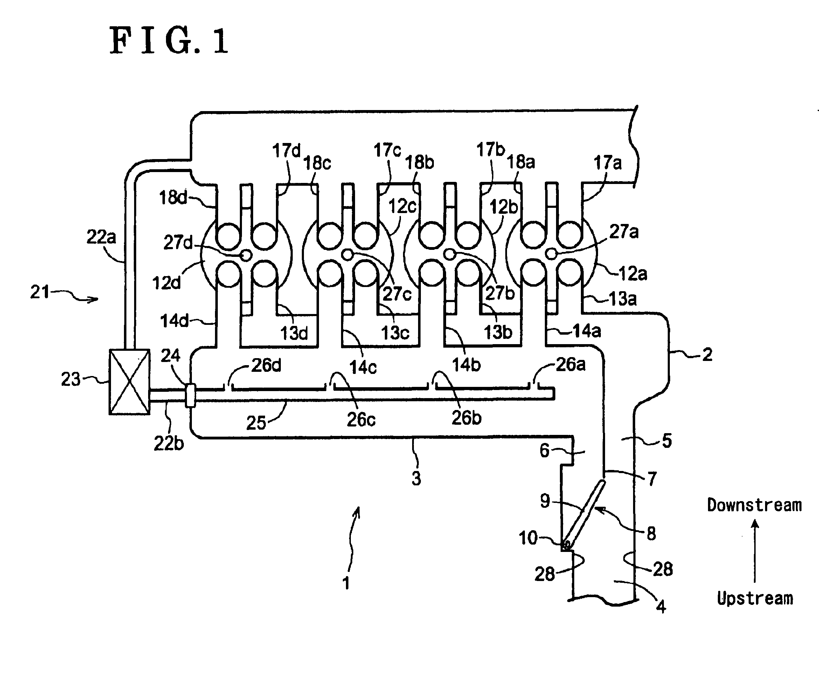

An embodiment of an air intake device for an internal combustion engine according to the present invention will be explained in accordance with the attached drawings. Fig.1 illustrates a schematic block diagram of an air intake device 1 applied to a diesel engine serving as an internal combustion engine. The diesel engine in the embodiment includes four cylinders 12a, 12b, 12c and 12d, and each cylinder has two air intake valves, two air exhaust valves and one fuel injection valve. Specifically, the cylinder 12a has two air intake valves, two air exhaust valves and a fuel injection valve 27a, the cylinder 12b has two air intake valves, two air exhaust valves and a fuel injection valve 27b, the cylinder 12c has two air intake valves, two air exhaust valves and a fuel injection valve 27c, and the cylinder 12d has two air intake valves, two air exhaust valves and a fuel injection valve 27d.

Air is supplied to one of the air intake valves provided at each one of the cylinders 12a, 12b, 12c and 12d. Specifically, air is supplied to one of the air intake valves of the cylinder 12a through an air intake passage 4, a first air intake passage 5, a first air intake manifold 2 and a first air intake port 13a. Air is supplied to one of the air intake valves of the cylinder 12b through the air intake passage 4, the first air intake passage 5, the first air intake manifold 2 and a first air intake port 13b. Air is supplied to one of the air intake valves of the cylinder 12c through the air intake passage 4, the first air intake passage 5, the first air intake manifold 2 and a first air intake port 13c. Air is supplied to one of the air intake valves of the cylinder 12d through the air intake passage 4, the first air intake passage 5, the first air intake manifold 2 and a first air intake port 13d.

Further, air is supplied to the other of the air intake valve provided at each one of the cylinders 12a, 12b, 12c and 12d. Specifically, air is supplied to the other of the air intake valves of the cylinder 12a through the air intake passage 4, a second air intake passage 6, a second air intake manifold 3 and a second air intake port 14a. Air is supplied to the other of the air intake valves of the cylinder 12b through the air intake passage 4, the second air intake passage 6, the second air intake manifold 3 and a second air intake port 14b. Air is supplied to the other of the air intake valves of the cylinder 12c through the air intake passage 4, the second air intake passage 6, the second air intake manifold 3 and a second air intake port 14c. Air is supplied to the other of the air intake valves of the cylinder 12d through the air intake passage 4, the second air intake passage 6, the second air intake manifold 3 and a second air intake port 14d.

Exhaust gas is exhausted from each of the cylinders 12a, 12b, 12c and 12d through a first exhaust port and a second exhaust port. Specifically, the exhaust gas is exhausted from the cylinder 12a through a first exhaust port 17a and a second exhaust port 18a, the exhaust gas is exhausted from the cylinder 12b through a first exhaust port 17b and a second exhaust port 18b, the exhaust gas is exhausted from the cylinder 12c through a first exhaust port 17c and a second exhaust port 18c, and the exhaust gas is exhausted from the cylinder 12d through a first exhaust port 17d and a second exhaust port 18d.

In this embodiment, the first air intake manifold 2 and the second air intake manifold 3 are made of a resin material.

A partition 7 is provided within the air intake passage 4 in order to divide the air intake passage 4 into the first air intake manifold 2 and the second air intake manifold 3. In this embodiment, the air intake passage 4 is divided by the partition 7 into the first air intake passage 5 and the second air intake passage 6.

In this configuration, air flowing from upstream of the partition 7 is divided into air flowing through the first air intake manifold 2 and air flowing through the second air intake manifold 3 so that the first air intake manifold 2 distributes the air into the first air intake port 13a of the cylinder 12a, the first air intake port 13b of the cylinder 12b, the first air intake port 13c of the cylinder 12c, and the first air intake port 13d of the cylinder 12d; and the second air intake manifold 3 distributes the air into the second air intake ports 14a of the cylinder 12a, the second air intake ports 14b of the cylinder 12b, the second air intake ports 14c of the cylinder 12c and the second air intake ports 14d of the cylinder 12d.

Specifically, the air flowing from upstream of the air intake passage is separated into two areas, one flowing into the first air intake manifold 2 through the first air intake passage 5, and the other flowing into the second air intake manifold 3 through the second air intake passage 6. Further, the first air intake manifold 2 distributes the air into the first air intake port 13a of the cylinder 12a, the first air intake port 13b of the cylinder 12b, the first air intake port 13c of the cylinder 12c, and the first air intake port 13d of the cylinder 12d; and the second air intake manifold 3 distributes the air into the second air intake port 14a of the cylinder 12a, the second air intake port 14b of the cylinder 12b, the second air intake port 14c of the cylinder 12c, and the second air intake port 14d of the cylinder 12d.

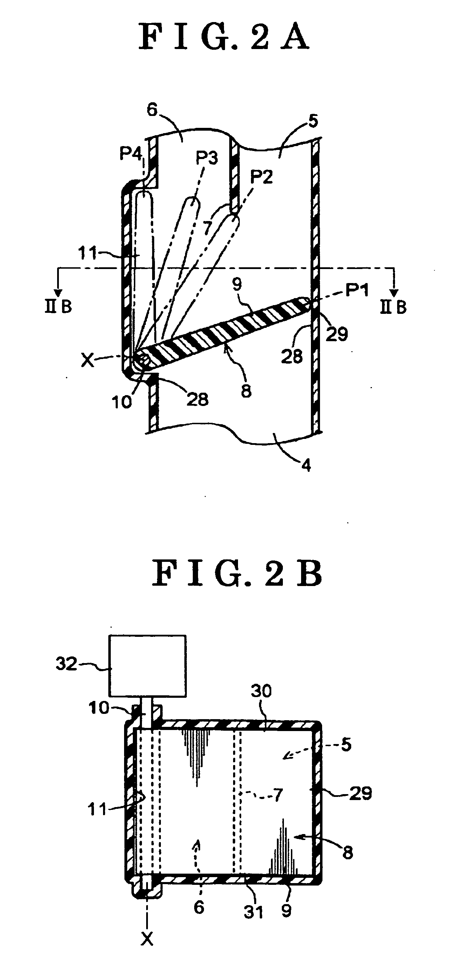

A diesel throttle valve 8, serving as a flow control mechanism and including a valve body 9 and a shaft 10, is provided upstream of the partition 7 within the air intake passage 4. Specifically, the diesel throttle valve 8 controls a cross section area of the air intake passage 4 by rotating a valve body 9 thereof so that the amount of air flowing through the air intake passage 4 into the first air intake manifold 2 and the amount of air flowing through the air intake passage into the second air intake manifold 3 are controlled. Thus, the diesel throttle valve 8 controls the amount of air flowing into each of the cylinders 12a, 12b, 12c and 12d so as to be increased or decreased. The shaft 10 supports the valve body 9 so as to be rotatable within the air intake passage 4 and attaches the valve body 9 to an inner wall 28 of the air intake passage 4. Because the shaft 10 is connected to an actuator 32 at the outside of the air intake passage 4 as illustrated in Fig.2, the shaft 10 is rotated by means of the actuator 32 so as to control a rotational position the valve body 9. In this embodiment, the valve body 9 is a rotary valve, not having all features of the invention.

Fig.2A illustrates a longitudinal sectional view of an enlarged diesel throttle valve 8. Fig.2B illustrates a transverse sectional view of the air intake passage 4 along IIB-IIB line. As mentioned above, the diesel throttle valve 8 is provided upstream of the partition 7 within the air intake passage 4. As illustrated in Fig.2A, the shaft 10 supports the valve body 9 so as to be rotatable in a manner where a rotation axis X of the valve body 9 is located in the vicinity of the inner wall 28 of the air intake passage 4. Thus, as illustrated in Fig.2A, the valve body 9 is rotated such as a single swing opening/closing the air intake passage 4 in order to control the amount of air flowing toward the cylinders. Further, as illustrated in Fig.2B, the inner wall 28 of the air intake passage 4 is formed in a rectangular shape in its cross section, and the valve body 9 is also formed in a rectangular shape in its cross section. Thus, an upper end 30 and a lower end 31 illustrated in Fig.2B of the valve body 9 typically contacts the inner wall 28 of the air intake passage 4 or is very close to the inner wall 28 of the air intake passage 4. While the air intake passage 4 is completely closed by the valve body 9, a top end 29 of the valve body 9 contacts the inner wall 28 of the air intake passage 4 or is very close to the inner wall 28.

By rotating the valve body 9 by means of the actuator 32, a space, defined between the valve body 9 and the inner wall 28 of the air intake passage 4 (a cross section area of the flow passage within the air intake passage 4), and another space, defined between the valve body 9 and the partition 7, are controlled, as a result, the amount of air flowing through the space, defined between the valve body 9 and the inner wall 28 into the first air intake manifold 2, and the amount of air flowing through the another space, defined between the valve body 9 and the partition 7 into the second air intake manifold 3, are controlled.

In other words, as described later, the diesel throttle valve 8 controls the amount of air flowing into the first air intake manifold 2 and the second air intake manifold 3 by positioning the valve body 9 at a first position (valve position P1), a second position (valve positions P1 through P2) and a third position (valve positions P2 through P4). Specifically, at the first position, a cross section area of the flow passage within the air intake passage 4 is fully closed, at the second position, air is supplied into only the first air intake manifold 2, and at the third position, air is distributed into both the first air intake manifold 2 and the second air intake manifold 3.

When the valve body 9 is rotated so as to be in the valve position P1 as illustrated in Fig.2A, the air intake passage 4 is closed scarcely leaving any space between the valve body 9 and the inner wall 28 within the air intake passage 4. Thus, scarcely any air flows into the first air intake manifold 2 and the second air intake manifold 3.

When the valve body 9 is rotated so as to be in the valve position P2, a space defined between the top end 29 of the valve body 9 and the inner wall 28 of the air intake passage 4 is large, in other words, the first air intake passage 5 is fully opened. Thus, the amount of air following into the first air intake manifold 2 is maximized. On the other hand, because there is scarcely any space between the top end 29 of the valve body 9 and the partition 7, scarcely any air flows into the second air intake manifold 3.

Thus, air is applied into the cylinder 12a through the first air intake manifold 2 and the first air intake port 13a, air is applied into the each cylinder 12b through the first air intake manifold 2 and the first air intake port 13b, air is applied into each cylinder 12c through the first air intake manifold 2 and the first air intake port 13c, and air is applied into the cylinder 12d through the first air intake manifold 2 and the first air intake port 13d. For example, when the diesel engine is rotated at low speed, the valve body 9 rotates to be in the valve position P2. In this embodiment, because each first air intake port 13a through 13d has a swirl-generating characteristic, air flowing into each cylinder 12a through 12d is whirled.

Further, as the rotational speed of the diesel engine is changed from low to high, because a large amount of air needs to be applied to each cylinder 12a through 12d, the valve body 9 is rotated to be in between the valve position P2 and the valve position P4. When the valve body 9 is positioned at the valve position P3, because a space is defined between the top end 29 of the valve body 9 and the partition 7, air also flows into the second air intake manifold 3. At this point, the amount of air flowing into the first air intake manifold 2 is still a maximum amount, and the amount of air flowing into the second air intake manifold 3 changes depending on the size of the space defined between the top end 29 of the valve body 9 and the partition 7. Thus, a ratio of the amount of air flowing into the each cylinder 12a through 12d via the first air intake manifold 2 and air flowing into each cylinder 12a through 12d via the second air intake manifold 3 can be controlled by rotating the valve body 9, as a result, the state of the swirl which have been generated in each cylinder 12a, 12b, 12c and 12d by air flowing through each of the first air intake ports 13a, 13b, 13c and 13d varies depending on air flowing through each of the second air intake ports 14a, 14b, 14c and 14d. Specifically, by changing the position of the valve body 9 to be in between the valve positions P2 through P4, the amount of air flowing through the first air intake manifold 2 and the amount of air flowing through the second air intake manifold 3 are controlled. Thus, depending on an interaction between air flowing through the first air intake manifold 2 and air flowing through the second air intake manifold 3, the state of the swirl generated within each of the cylinders 12a, 12b, 12c and 12d is controlled.

Thus, an air intake device having a single diesel throttle valve 8 located upstream of the each cylinder 12a through 12d within the air intake passage 4, and functioning as both the known diesel throttle valve and a swirl control valve, can be provided. Although this air intake device achieves a required function as an air intake device for an internal combustion engine, the configuration thereof can be simplified, and the costs thereof are reduced.

As illustrated in Fig.2B, the inner wall 28 of the air intake passage 4 is formed in a rectangular shape, and the valve 9 is also formed in a rectangular shape. When the valve body 9 is rotated so as to be in a position at which the air intake passage 4 is fully opened, the valve body 6 is positioned in the vicinity of the inner wall 28 of the air intake passage 4. At this point, the valve body 9 does not act as a resistance to the airflow within the air intake passage 4. Thus, the valve body 9 is rotated so as to be in a position at which the air intake passage 4 is fully opened so that a large amount of air can flow into each of the cylinders 12a through 12d. More specifically, a protruding space 11 is formed at the inner wall 28 of the air intake 4. The protruding space 11 is formed in a manner where a part of the inner wall 28 of the air intake passage 4 protrudes outward.

The protruding space 11 is formed in a rectangular shape so as to house the valve body 9 as shown in Fig.2A. Specifically, when the valve body 9 is rotated to be in the valve position P4, the valve body 9 and the shaft 10 is housed within the protruding space 11, which is formed so as to protrude outward. In this state, the amount of air flowing within the first air intake manifold 2 and the amount of air flowing within the second air intake manifold 3 are maximized. Thus, the valve body 9 and the shaft 10 are positioned so as to be away from the inflowing air within the air intake passage 4, as a result, the valve body 9 does not interfere with the inflowing air within the intake passage 4.

Further, an EGR (exhaust gas recirculation) device 21 is provided at the air intake device 1 according to the embodiment. The EGR device 21 serves as a exhaust gas guiding portion through which a recycled gas, which is a part of the exhaust gas, is guided to be supplied into the second air intake manifold 3. The EGR device 21 includes a EGR passage 22a, a EGR valve 23 and a EGR passage 22b. The EGR passage 22a is connected to an air exhaust manifold, which is comprised of first exhaust ports 17a through 17d and second exhaust ports 18a through 18d. The EGR valve 23 controls the amount of the recycled exhaust gas flowing into the second air intake manifold 3. The recycled exhaust gas flows from the EGR valve 23 into the second air intake manifold 3 through the EGR passage 22b. The EGR passage 22a may be connected to, for example, only the second exhaust port 18d of the cylinder 12d.

Specifically, the EGR passage 22b is connected to the second air intake manifold 3 by means of a connector 24. The recycled exhaust gas flows into the second air intake manifold 3 in a manner where the recycled exhaust gas is guided by means of a exhaust gas guide tube 25 connected to the connector 24 into the inside of the second air intake manifold 3.

Plural holes 26a, 26b, 26c, and 26d are formed at the exhaust gas guide tube 25. Specifically, as illustrated in Fig.1, the hole 26a is formed so as to open toward the second air intake port 14a of the cylinder 12a, the hole 26b is formed so as to open toward the second air intake port 14b of the cylinder 12b, the hole 26c is formed so as to open toward the second air intake port 14c of the cylinder 12c, and the hole 26d is formed so as to open toward the second air intake port 14d of the cylinder 12d.

In this configuration, because the pressure of the recycled exhaust gas is higher than the pressure of the air within the second air intake manifold 3, the recycled exhaust gas flowing within the exhaust gas guide tube 25 spouts from each of the holes 26a, 26b, 26c and 26d into each of the second air intake ports 14a, 14b, 14c and 14d of the second air intake manifold 3. The spouted recycled exhaust gas flows into each of the cylinders 12a, 12b, 12c and 12d.

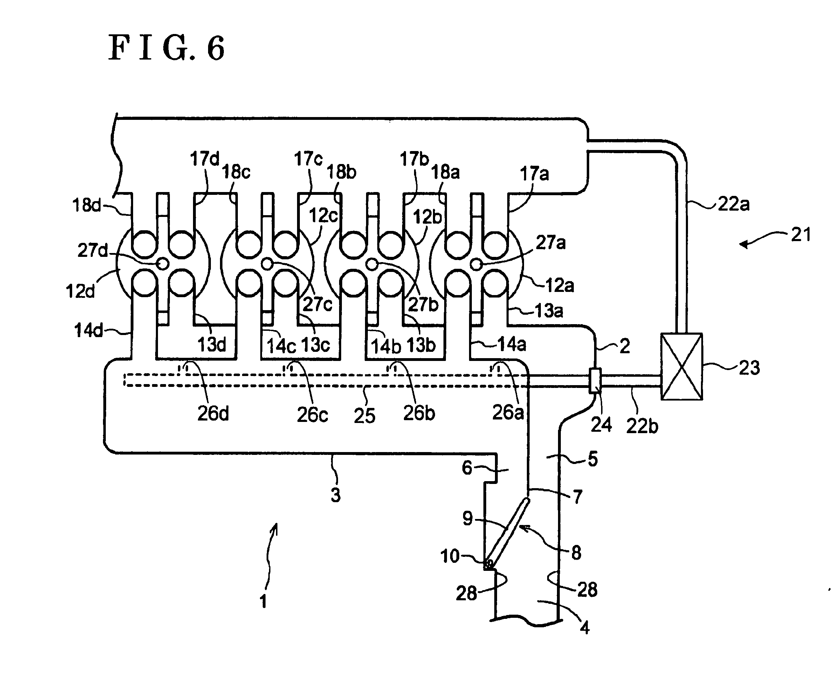

The EGR device 21 may be provided at the side of the first air intake manifold 2 as illustrated in Fig.6. Specifically, the EGR passage 22a is connected to an air exhaust manifold comprised of first exhaust ports 17a through 17d and second exhaust ports 18a through 18d. The EGR valve 23 controls the amount of the recycled exhaust gas flowing into the first air intake manifold 2. The recycled exhaust gas flows from the EGR valve 23 into the first air intake manifold 2 through the EGR passage 22b. Specifically, the EGR passage 22b is connected to the first air intake manifold 2 by means of a connector 24. The recycled exhaust gas flows into the first air intake manifold 2 in a manner where the recycled exhaust gas is guided by means of a exhaust gas guide tube 25 connected to the connector 24 into the inside of the first air intake manifold 2.

Plural holes 26a, 26b, 26c, and 26d are formed at the exhaust gas guide tube 25. Specifically, as illustrated in Fig.6, the hole 26a is formed so as to open toward the first air intake port 13a of the cylinder 12a, the hole 26b is formed so as to open toward the first air intake port 13b of the cylinder 12b, the hole 26c is formed so as to open toward the first air intake port 13c of the cylinder 12c, and the hole 26d is formed so as to open toward the first air intake port 13d of the cylinder 12d.

In this configuration, because the pressure of the recycled exhaust gas is higher than the air pressure within the first air intake manifold 2, the recycled exhaust gas flows into the exhaust gas guide tube 25 spouts from each of the holes 26a, 26b, 26c and 26d into each of the first air intake ports 13a, 13b, 13c and 13d of the first air intake manifold 2. The spouted recycled exhaust gas flows into each of the cylinders 12a, 12b, 12c and 12d.

Thus, according to the embodiment, because the recycled exhaust gas is evenly distributed into each of the cylinders 12a, 12b, 12c and 12d by means of the exhaust gas guide tube 25, combustion conditions such as a combustion temperature and a fuel consumption at each one of the cylinders 12a, 12b, 12c and 12d can be appropriately controlled. Further, a size and a direction of each hole 23a through 26d formed on the exhaust gas guide tube 25 may be changed depending on each of the cylinders 12a, 12b, 12c and 12d.

### <Another embodiment>

### <1>

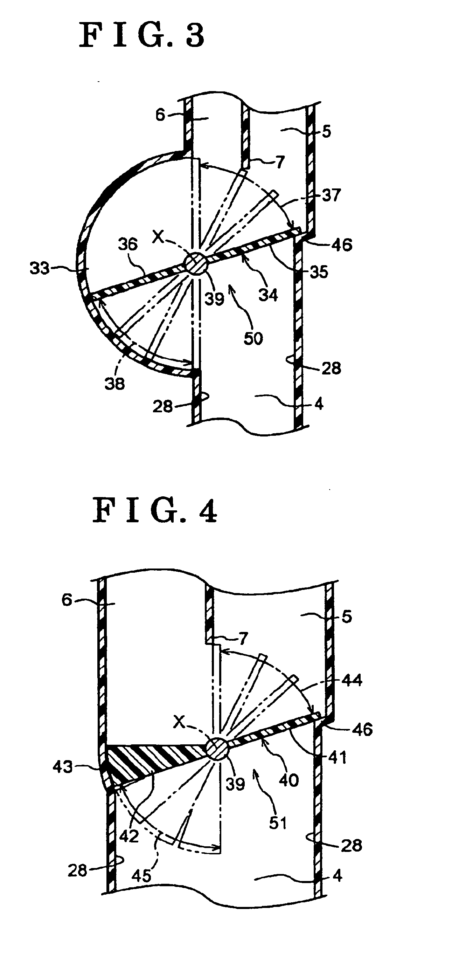

According to the invention, a diesel throttle valve 50 may be provided within the air intake passage 4 as illustrated in Fig.3. Specifically, the diesel throttle valve 50 is a rotary valve including a valve body 34 and a shaft 39 having a rotation axis X. More specifically, the valve body 34 includes a first valve member 35 and a second valve member 36, and the shaft 39 is sandwiched between the first valve member 35 and the second valve member 36.

At the air intake passage 4 upstream of the partition 7, a protruding space 33 is formed so as to protrude outward. Because the cross sections of the air intake passage 4, the first air intake passage 5 and the second air intake passage 6 are formed in a rectangular shape in its transverse cross section, the protruding space 33 is formed in a half cylinder shape. The protruding space 33 is away from the inflowing air within the air intake passage 4 and positioned out of a line connecting the air intake passage 4 and the second air intake passage 6, and the first air intake passage 5 and the second air intake passage 6.

Because the shaft 39 is located in the vicinity of the central portion of an arc portion of the protruding space 33, which is formed in a half cylinder shape, at the point when the valve body 34 is rotated so as to be parallel to a direction of the inflowing air within the air intake passage 4, the air intake passage 4 is collinear with the wall surface of the second air intake passage 6. Thus, the valve body 34 does not act as a resistance of air flowing within the air intake passage 4. Further, because the valve body 34 is comprised of the first valve member 35 and the second valve member 36, which are provided so as to sandwich the rotation axis X, the rotation of the valve body 34 relative to the rotation axis X is well balanced.

Thus, the rotational position of the valve body 34 can be accurately controlled, as a result, the amount of air flowing into each of the cylinders 12a, 12b, 12c and 12d through the first air intake manifold 2 and through the second air intake manifold 3 are accurately controlled.

The first valve member 35 is rotated within a first area 37. A second area 38, serving as a second valve member rotating area, within which the second valve member 36 is rotated, exists in the protruding space 33 formed in a manner where a part of the inner wall 28 of the air intake passage 4 is projected in one direction from inside of the air intake passage 4 toward the outside.

Further, because the outer end portion of the second valve member 36, in a radial direction in Fig.3, typically contacts or comes very close to the air intake passage 4, scarcely any space is provided within the air intake passage 4. In the same manner as the valve body 9, the first valve member 35 is rotated within the first area 37 in order to adjust the size of a space defined between the valve member 35 and the inner wall of the air intake passage 4, and a space defined between the valve member 35 and the partition 7, as a result, the amount of air flowing into the first air intake manifold 2 through the space and the amount of air flowing into the second air intake manifold 3 through the space are controlled. In other words, the valve body 34 controls the amount of air flowing toward each of the cylinders 12a, 12b, 12c and 12d so as to be increased or decreased, and varies the ratio between the amount of air flowing through the first air intake manifold 2 and the amount of air flowing through the second air intake manifold 3, both of which flow into each of the cylinders 12a, 12b, 12c and 12d.

Further, a stopper portion 46 is formed at the wall surface 28 of the air intake passage 4 in order to regulate the rotation of the valve body 34. Specifically, when the valve body 34 is rotated in a clockwise direction in Fig.3 so as to close the air intake passage, the first valve member 35 contacts the stopper portion 46 so that the rotation of the valve body 34 is stopped. Thus, the valve body 34 is prevented from being rotated more than needed. When the valve body 34 is rotated so that the first valve member 35 contacts the stopper portion 46, the air intake passage 4 is closed.

Another configuration of the diesel throttle valve will be explained in accordance with the drawing illustrated in Fig.4. The diesel throttle valve 51 illustrated in Fig.4 includes a valve body 40, serving as a rotary valve, having a first valve member 41 formed in a flat plate shape and a second valve member 42 formed in a sector shape in its cross section. The first valve member 41 and the second valve member 42 are positioned in such a way that a shaft 39 having a rotation axis X is sandwiched therebetween.

A stopper portion 46 is formed at the wall surface 28 of the air intake passage 4 in order to regulate the rotation of the valve body 40. Specifically, when the valve body 40 is rotated in a clockwise direction in Fig.4 so as to close the air intake passage 4, the first valve member 41 contacts the stopper portion 46 so that the rotation of the valve body 40 is stopped. Thus, the valve body 40 is prevented from being rotated more than needed. When the valve body 40 is rotated so that the first valve member 41 contacts the stopper portion 46, in the cross sectional view illustrated in Fig.4, a surface of the first valve member 41 at the upstream side is positioned in alignment with a surface of the second valve member 42 at the upstream side. In this state, the air intake passage 4 is closed.

Further, at the wall surface 28 of the air intake passage 4, a curved surface is formed in a manner where it matches the curvature of the arc portion 43 in its cross section. In this configuration, while the air intake passage 4 is closed by means of the valve body 40, the arc portion 43 contacts the curved surface of the wall surface 28. As the valve body 40 is rotated in a clockwise direction so as to open the air intake passage 4, a space defined between a outer peripheral portion of the first valve member 41 and the wall surface 28 of the air intake passage 4 is increased, as a result, the amount of air flowing into the first air intake passage 5 is increased.

As the valve body 40 is further rotated in an anticlockwise direction, the space defined between the first valve member 41 and the wall surface 28 is further increased, at the same time, a space defined between the arch portion 43 of the second valve member 42 and the wall surface 28 of the air intake passage 4 is increased so that air starts flowing into the second air intake passage 6. By controlling the rotational position of the valve body 40 as mentioned above, a total amount of air flowing into each of the cylinders 12a, 12b, 12c and 12d is controlled so as to be increased and decreased, at the same time, a ratio between the amount of air flowing into each of the cylinders 12a, 12b, 12c and 12d through the first air intake manifold 2 and the amount of air flowing into each of the cylinders 12a, 12b, 12c and 12d through the second air intake manifold 3 varies.

### <2>

In the abovementioned embodiment, the air intake passage 4 is formed in a rectangular shape in its cross section, however, the shape of the air intake passage 4 in its cross section is not limited to the example of the embodiment. For example, it may be formed in a circular shape in its cross section.

### <3>

In the abovementioned embodiment, the rotational position of the valve body 9 is set to one of the valve positions P1, P2, P3 and P4, however, the position of the rotational position is not limited to the example of the embodiment. For example, the valve body 9 may be position at any point between the valve positions P 1 through P4.

### <4>

In the abovementioned embodiment, a rotary valve is used as the valve body.

According to the configuration of the embodiment, by changing the position of the valve body of the flow control mechanism provided upstream of the partition within the air intake passage, a total amount of air flowing into the cylinders, provided downstream of the flow control mechanism, are controlled so as to be increased or decreased, at the same time, a ratio between the amount of air flowing into the cylinders through the first air intake manifold and the amount of air flowing into the cylinders through the second air intake manifold is changed. Specifically, the flow control mechanism is rotated in a manner where the valve body thereof is positioned: at a first position at which the cross section area of the air intake passage is fully closed; at a second position at which air flows only into the first air intake manifold; or at a third position at which airflows into both the first air intake manifold and the second air intake manifold. Thus, the amount of air flowing into the first air intake manifold and the amount of air flowing into the second air intake manifold are controlled.

Thus, because the total amount of air flowing into each of the cylinders is controlled so as to be increased or decreased, the internal combustion engine is operated under various conditions, for example, the internal combustion engine may be operated at a low rotation speed, and the internal combustion engine may also be operated at a high rotation speed. Further, because the ratio between the amount of air flowing through the first air intake manifold into each of the cylinders and the amount of air flowing through the second air intake manifold into each of the cylinders is adjustable, a state of swirl generated within each of the cylinders can be controlled. The swirl is generated by an interaction of air flowing through the first air intake manifold into the cylinder and air flowing through the second air intake manifold into the cylinder.

By providing one flow control mechanism upstream of each cylinder within the air intake passage, an air intake device for an internal combustion engine functions as the known diesel throttle valve and also functions as a swirl control valve. Thus, the configuration of the device is simplified, and costs of the device are reduced, at the same time, functions, required as the air intake device for an internal combustion engine, are realized.

According to the embodiment, when the rotary valve serving as a valve body is controlled so as to be in a rotational position at which the air intake passage is fully opened, the rotary valve is positioned in the vicinity of the surface of the inner wall of the air intake passage. At this point, because the rotary valve does not act as an airflow resistance of air flowing within the air intake passage, a large amount of air can be applied into the cylinders through the fully opened air intake passage.

According to the embodiment, when the rotary valve is rotated so as to be in a position at which the air intake passage is fully opened so that the amount of air flowing into the first air intake manifold and the amount of air flowing into the second air intake manifold are maximized, the rotary valve is positioned within the protruding space. Specifically, the rotary valve is positioned so as to be away from inflowing air within the air intake passage and does not act as a resistance of air flowing within the air intake passage.

According to the embodiment, because the second area, within which the second valve member is positioned while the rotary valve serving as a valve body is rotated, is set within the protruding space, the second valve member is positioned being away from the inflowing air within the air intake passage. Further, the rotary valve comprises the first valve member, the shaft and the second valve member. Because a rotation axis of the shaft is positioned so as to be sandwiched between the first valve member and the second valve member, the rotary valve is rotated relative to the rotation axis and is well balanced. Thus, the rotational position of the rotary valve is accurately controlled, as a result, the amount of air flowing through the first air intake manifold and the amount of air flowing through the second air intake manifold are accurately controlled.

According to the embodiment, the exhaust gas guide tube exhausting the recycled exhaust gas is provided in the vicinity of the first air intake port or the second air intake port of each cylinder. Specifically, the recycled exhaust gas is evenly distributed into each cylinder through the first air intake port or the second air intake port. Thus, combustion conditions such as a fuel consumption and a combustion temperature are appropriately controlled.

## Claims

1. An air intake device (1) for an internal combustion engine having plural cylinders (12a, 12b, 12c, 12d) comprising:
an air intake passage (4) including a first air intake manifold (2) and a second air intake
manifold (3);
the first air intake manifold distributing air to a first air intake port (13a, 13b, 13c or 13d)
provided at each one of the cylinders;
the second air intake manifold distributing air to a second air intake port (14a, 14b, 14c or
14d) provided at each one of the cylinders;
a partition (7) provided within the air intake passage to divide the air intake passage into
the first air intake manifold and the second air intake manifold; and
a flow control mechanism (8) having a valve body (34) rotatably supported by an inner
wall (28) of the air intake passage and located upstream of the partition within the air intake passage, wherein
the flow control mechanism (8) controls a cross section area of the air intake passage upstream of the partition (7), **characterized in that** the valve body (34) configured to be operated so that an amount of air flowing into the first air intake manifold (2) and an amount of air flowing into the second air intake manifold (3) are controlled; and the flow control mechanism is (8) configured to be operated in a manner where the valve body (34) thereof is positioned to be one of: in a first position (P1) at which the valve body (34) closes air flow communication between the air intake passage (4) and the cylinders (12a,12b,12c,12d); in a second position (P2) at which air flows into only the first air intake manifold (2); and in a third position (P3) at which air flows into both the first air intake manifold (2) and the second air intake manifold (3); and wherein the valve body (34) is a rotary valve having a first valve member (35) and a second valve member (36) in a manner where a rotation axis (X) of the valve body is positioned therebetween, and a protruding space (33) is formed upstream of the partition within the air intake passage so as to protrude toward the outside of the air intake passage, and a second valve member rotating area (38), within which the second valve member is rotated, is set in the protruding space.

2. The air intake device (1) for an internal combustion engine according to Claim 1, wherein the valve body is a rotary valve, and a rotation axis of the rotary valve is positioned in the vicinity of a surface of the inner wall of the air intake passage.

3. The air intake device (1) for an internal combustion engine according to Claim 2, wherein, a protruding space (11) is formed upstream of the partition within the air intake passage so as to protrude toward the outside of the air intake passage, and while the rotary valve is positioned within the protruding space, the amount of air flowing into the first air intake manifold and the amount of air flowing into the second air intake manifold are maximized.

4. The air intake device (1) for an internal combustion engine according to any one of Claims 1 through (3) further including an exhaust gas guide tube (25) at which plural holes (26a, 26b 26c and 26d) are formed so as to open in the vicinity of the first air intake port of each of the cylinders or the second air intake port of each of the cylinders, and recycled exhaust gas is guided by the exhaust gas guide tube to flow into the first air intake manifold or the second air intake manifold.

## Patentansprüche

1. Lufteinlasseinrichtung (1) für einen Verbrennungsmotor mit einer Mehrzahl von Zylindern (12a, 12b, 12c, 12d), enthaltend:
einen Lufteinlassdurchlass (4), der einen ersten Lufteinlassverteiler (2) und einen zweiten Lufteinlassverteiler (3) enthält;
wobei der erste Lufteinlassverteiler Luft an eine erste Lufteinlassöffnung (13a, 13b, 13c, 13d) verteilt, die an jeden der Zylinder vorgesehen ist;
wobei der zweite Lufteinlassverteiler Luft an die zweite Lufteinlassöffnung (14a, 14b, 14c oder 14d) verteilt, die an jedem der Zylinder vorgesehen ist;
eine Trennwand (7), die innerhalb des Lufteinlassdurchlasses vorgesehen ist zum Teilen des Lufteinlassdurchlasses in den ersten Lufteinlassverteiler und den zweiten Lufteinlassverteiler; und
einen Strömungssteuermechanismus (8), der einen Ventilkörper (34) aufweist, der drehbar durch eine Innenwand (28) des Lufteinlassdurchlasses gestützt wird und sich stromaufwärts der Trennwand innerhalb des Lufteinlassdurchlasses befindet, wobei
der Strömungssteuermechanismus (8) eine Querschnittsfläche des Lufteinlassdurchlasses stromaufwärts der Trennwand (7) kontrolliert,
**dadurch gekennzeichnet, dass** der Ventilkörper (34) angepasst ist betrieben zu werden, so dass eine Menge von Luft, die in den ersten Lufteinlassverteiler (2) strömt, und eine Menge von Luft, die in den zweiten Lufteinlassverteiler (3) strömt, gesteuert werden; und der Strömungssteuermechanismus (8) angepasst ist, dass er auf eine Weise betrieben wird, in der der Ventilkörper (34) davon positioniert ist, dass es ist: in einer ersten Position (P1), in der der Ventilkörper (34) eine Luftströmungsverbindung zwischen dem Lufteinlassdurchlass (4) und den Zylindern (12a, 12b, 12c, 12d) schließt; in einer zweiten Position (P2), in der die Luft in nur den ersten Einlassverteiler (2) strömt; und in einer dritten Position (P3), in der Luft in sowohl den ersten Lufteinlassverteiler (2) als auch den zweiten Lufteinlassverteiler (3) strömt; und
wobei der Ventilkörper (34) ein Drehventil ist, das ein erstes Ventilelement (35) und ein zweites Ventilelement (36) aufweist, auf eine Weise, in der eine Rotationsachse (X) des Ventilkörpers dazwischen positioniert ist, und ein vorspringender Raum (33) stromaufwärts der Trennung innerhalb des Lufteinlassdurchlasses geformt ist, so dass er in Richtung der Außenseite des Lufteinlassdurchlasses vorsteht, und ein zweites Drehgebiet (38) des Ventilelements, innerhalb dessen sich das zweite Ventilelement dreht, in dem vorspringenden Raum festgelegt ist.

2. Lufteinlasseinrichtung (1) für einen Verbrennungsmotor nach Anspruch 1, wobei der Ventilkörper ein Drehventil ist und eine Rotationsachse des Drehventils in der Umgebung einer Oberfläche der Innenwand des Lufteinlassdurchlasses positioniert ist.

3. Lufteinlasseinrichtung (1) für einen Verbrennungsmotor nach Anspruch 2, wobei ein vorspringender Raum (11) stromaufwärts der Trennwand innerhalb des Lufteinlassdurchlasses geformt ist, so dass er zur Außenseite des Lufteinlassdurchlasses vorsteht, und während das Drehventil innerhalb des vorstehenden Raums positioniert ist, die Menge von Luft, die in den ersten Einlassverteiler strömt, und die Menge von Luft, die in den zweiten Einlassverteiler strömt, maximiert sind.

4. Lufteinlasseinrichtung (1) für einen Verbrennungsmotor nach einem der Ansprüche 1 bis 3, weiter enthaltend ein Abgasführungsrohr (25), an dem eine Mehrzahl von Löchern (26a, 26b, 26c und 26d) gebildet sind, so dass sie sich in der Umgebung der ersten Lufteinlassöffnung von jedem der Zylinder oder der zweiten Lufteinlassöffnung von jedem der Zylinder öffnen, und recycliertes Abgas durch das Abgasführungsrohr geführt wird, dass es in den ersten Einlassverteiler oder den zweiten Einlassverteiler strömt.

## Revendications

1. Dispositif d'entrée d'air (1) pour un moteur à combustion interne possédant plusieurs cylindres (12a, 12b, 12c, 12d), comprenant :
un passage d'entrée d'air (4) englobant un premier collecteur d'entrée d'air (2) et un deuxième collecteur d'entrée d'air (3) ;
le premier collecteur d'entrée d'air distribuant de l'air à un premier orifice d'entrée d'air (13a, 13b, 13c ou 13d) prévu à chacun des cylindres;
le deuxième collecteur d'entrée d'air distribuant de l'air à un deuxième orifice d'entrée d'air (14a, 14b, 14c ou 14d) prévu à chacun des cylindres ;
une paroi de séparation (7) prévue au sein du passage d'entrée d'air pour subdiviser le passage d'entrée d'air en un premier collecteur d'entrée d'air et en un deuxième collecteur d'entrée d'air ; et
un mécanisme de réglage de l'écoulement (8) possédant un corps de clapet (34) supporté en rotation par la paroi interne (28) du passage d'entrée d'air et disposé en amont de la paroi de séparation au sein du passage d'entrée d'air, dans lequel
le mécanisme de réglage de l'écoulement (8) règle la surface de section transversale du passage d'entrée d'air en amont de la paroi de séparation (7), **caractérisé en ce que** le corps de clapet (34) est configuré pour être actionné de façon à régler la quantité d'air s'écoulant dans le premier collecteur d'entrée d'air (2) et la quantité d'air s'écoulant dans le deuxième collecteur d'entrée d'air (3) ; et le mécanisme de réglage de l'écoulement (8) est configuré pour être actionné de manière telle que son corps de clapet (34) est positionné pour se trouver: dans une première position (P1) dans laquelle le corps de clapet (34) ferme la communication par écoulement d'air entre le passage d'entrée d'air (4) et les cylindres (12a, 12b, 12c, 12d) ; dans une deuxième position (P2) dans laquelle de l'air s'écoule uniquement dans le premier collecteur d'entrée d'air (2) ; et dans une troisième position (P3) dans laquelle de l'air s'écoule à la fois dans le premier collecteur d'entrée d'air (2) et dans le deuxième collecteur d'entrée d'air (3) ; et dans lequel le corps de clapet (34) représente un robinet rotatif possédant un premier membre de clapet (35) et un deuxième membre de clapet (36), d'une manière telle que l'axe de rotation (X) du corps de clapet est situé entre les deux, et un espace faisant saillie (33) est formé en amont de la paroi de séparation au sein du passage d'entrée d'air de façon à faire saillie à l'extérieur du passage d'entrée d'air, et une surface de rotation (38) du deuxième membre de clapet, au sein de laquelle le deuxième membre de clapet effectue des rotations, est réglée dans l'espace faisant saillie.

2. Dispositif d'entrée d'air (1) pour un moteur à combustion interne selon la revendication 1, dans lequel le corps de clapet est un robinet rotatif, l'axe de rotation du robinet rotatif étant disposé à proximité de la surface de la paroi interne du passage d'entrée d'air.

3. Dispositif d'entrée d'air (1) pour un moteur à combustion interne selon la revendication 2, dans lequel un espace faisant saillie (11) est formé en amont de la paroi de séparation au sein du passage d'entrée d'air de façon à faire saillie à l'extérieur du passage d'entrée d'air et, lorsque le robinet rotatif est disposé au sein de l'espace faisant saillie, on maximise la quantité d'air qui s'écoule dans
le premier collecteur d'entrée d'air et la quantité d'air qui s'écoule dans le deuxième collecteur d'entrée d'air.

4. Dispositif d'entrée d'air (1) pour un moteur à combustion interne selon l'une quelconque des revendications 1 à 3, englobant en outre un tube de guidage (25) pour les gaz d'échappement dans lequel on pratique plusieurs trous (26a, 26b, 26c et 26d) qui s'ouvrent à proximité du premier orifice d'entrée d'air de chacun des cylindres ou du deuxième orifice d'entrée d'air de chacun des cylindres, les gaz d'échappement recyclés étant guidés par le tube de guidage des gaz d'échappement pour s'écouler dans le premier collecteur d'entrée d'air ou dans le deuxième collecteur d'entrée d'air.
